# EUROPEAN PATENT SPECIFICATION

(11) **EP 1 051 609 B1**
(45) Date of publication and mention of the grant of the patent: **12.10.2005**
(21) Application number: 99905489.3
(22) Date of filing: 27.01.1999
(51) Int. Cl.: G01N 23/04

(54) **GATED TRANSMISSION AND SCATTER DETECTION FOR X-RAY IMAGING**
ABWECHSELNDE TRANSMISSIONS- UND STREUUNGSDETEKTION FÜR EINE RÖNTGENABBILDUNGSVORRICHTUNG
DETECTION ALTERNEE DE TRANSMISSION ET DE DIFFUSION POUR L'IMAGERIE PAR RAYONS X

(30) Priority: 28.01.1998 US 72890 P
(43) Date of publication of application: 15.11.2000
(73) Proprietor: American Science & Engineering, Inc., Billerica, MA 01821 (US)
(72) Inventor: GRODZINS, Lee, Lexington, MA 02173 (US); SMITH, Roderick, D., Belmont, MA 02178 (US)
(74) Representative: Ertl, Nicholas Justin
(86) International application number: PCT/US1999/001700
(87) International publication number: WO 1999/039189

(56) References cited:
- US-A- 5 065 418
- US-A- 5 313 511
- US-A- 5 600 303
- US-A- 5 600 700

## Description

### Technical Field

The present invention relates to an x-ray system and method for concurrently imaging an object in higher-energy photons transmitted through the object and in lower-energy photons scattered by the object.

### Background of the Invention

X-rays are often used for the inspection of enclosures such as cargo containers. The use of x-rays both transmitted through the inspected item and scattered by its contents are known in the art. Typically, the item is illuminated by a single source of x-rays, and transmitted and scattered radiation is detected by detectors or arrays of detectors disposed, respectively, in the direction of propagation of the illuminating beam or in other directions, to the front, back, or sides of the inspected item (see e.g. the document US-A-5600700).

To obtain useful images of the x-rays transmitted through heavily loaded containers, such as truck trailers or sea shipping containers, etc., often 6 feet to 10 feet thick, it is necessary to use x-rays with energies well in excess of 1 MeV. Lower energy x-rays may be attenuated to the point that they can no longer be detected by detectors on the side of the container opposite to the side illuminated by the x-ray source. Typical commercial x-ray systems such as those employed for the purposes described above use linear accelerators to generate x-rays from electrons having energies from 5 MeV to 10 MeV; the average energy of the x-ray spectrum generated by a 10 MeV machine is approximately 3 MeV.

Images obtained from transmitted x-rays, however, are insensitive to thin, light material. Scattered radiation, in particular backscattered radiation may be used to obtain images of such thin objects not too far inside the containers and also to discriminate organic from non-organic objects. Various methods of identifying a backscatter signal with a position within the illuminated object employ scanned pencil beams of x-rays, are described, for example, in U.S. Patent Nos. 4,809,312 and 4,825,454 which are hereby incorporated herein by reference.

At lower x-ray energies, i.e. <- 450 keV, it is practical to obtain a transmission image and a backscatter image simultaneously using the x-rays from a single x-ray generator. As the energy of the x-rays increases, however, the method of backscatter imaging becomes less and less practical for three reasons: First, the probability of scattering into the back directions (i.e. through about 180°) drops rapidly as the energy of the x-rays increase. Thus MeV x-ray beams produce relatively weak backscatter signals. Second, the backscatter signal becomes independent of the scattering material for x-ray energies above a few hundred keV. Thus, backscattering from beams having energies in the MeV range, such as those discussed in connection with transmission imaging of large containers, provide insufficient material discrimination. Third, while backscatter imaging typically employs a "pencil" beam of x-rays to raster across the container, such that the cross sectional dimensions of the beam determine the spatial resolution of the backscatter image, it is technically difficult to form a scanning pencil beam of MeV x-rays.

### Summary of the Invention

In accordance with one aspect of the invention, in one of its embodiments, there is provided an inspection system for inspecting an enclosure and its contents. The system has a first source for producing an intermittent first beam of penetrating radiation having a duration of inactivity and at least one detector for generating a transmission signal based on at least the penetrating radiation of the first beam transmitted through the enclosure. Additionally, the system has a second source for producing a second beam of penetrating radiation and at least one detector for generating a scatter signal based on at least the penetrating radiation scattered by the contents of the enclosure. The system also has a processor for deriving properties of the contents of the enclosure on the basis of the transmission signal and the scatter signal.

In accordance with an embodiment of the invention, the first and second beams may have different energy spectra. In particular, the first beam may be a high-energy beam. The at least one detector for generating a transmission signal may be gated for detection substantially only during the pulsing of the high-energy transmission beam. The scatter detector may be gated for non-detection during the pulsing of the transmission beam.

In accordance with another embodiment of the invention, the system may also have a steerable electron beam for generating the first and second beams of penetrating radiation.

### Brief Description of the Drawings

The foregoing features of the invention will be more readily understood by reference to the following detailed description taken with the accompanying drawings in which:
FIG. 1 is a schematic top view of an x-ray inspection configuration employing independent transmission and backscatter systems in accordance with an embodiment of the present invention;
FIG. 2 is a schematic elevation view in cross section of the transmission imaging components of the inspection system of FIG. 1;
FIG. 3 is an elevation schematic of an inspection system in accordance with a preferred embodiment of the invention, showing one of the scanning pencil beam systems used for backscatter imaging;
FIG. 4 shows a sequence for gating the transmission and backscatter detectors in accordance with the embodiment of FIG. 1;
FIG. 5 is a schematic view in cross section of an x-ray inspection configuration employing a source of a fan beam for transmission measurements and a source of a scanning pencil beam for scattering measurements, in accordance with an alternate embodiment of the present invention;
FIG. 6 shows a sequence for gating the transmission and backscatter detectors in accordance with the embodiment of FIG. 5;
FIG. 7 is a schematic view of an apparatus for generating multiple independent x-ray beams with a single steerable source of electrons, in accordance with an alternate embodiment of the invention;
FIG. 8 is a schematic view of a further apparatus for generating multiple independent x-ray beams with a single steerable source of electrons, in accordance with an alternate embodiment of the invention.

### Detailed Description of Preferred Embodiments

In accordance with preferred embodiments of the invention, both a high energy transmission image and a low-energy backscatter image may be obtained of the same object or container during a single pass of the container through an inspection system. Dual transmission and backscatter imaging may be achieved by using a single accelerator as a source of x-rays, such as by changing the electron energy, temporally alternating between peak energies of 5 MeV and 450 keV. This, however, is not a useful solution since it may be desirable to use entirely different beam shapes for the transmission and backscatter modalities. In particular, a fan beam may be effective for producing the transmission image and may be inexpensively generated by a pulsed accelerator. On the other hand, a pencil beam, most readily formed by a continuous wave accelerator, may be preferable for backscatter imaging since pencil beam irradiation allows the spatial source of scattered radiation to be readily identified.

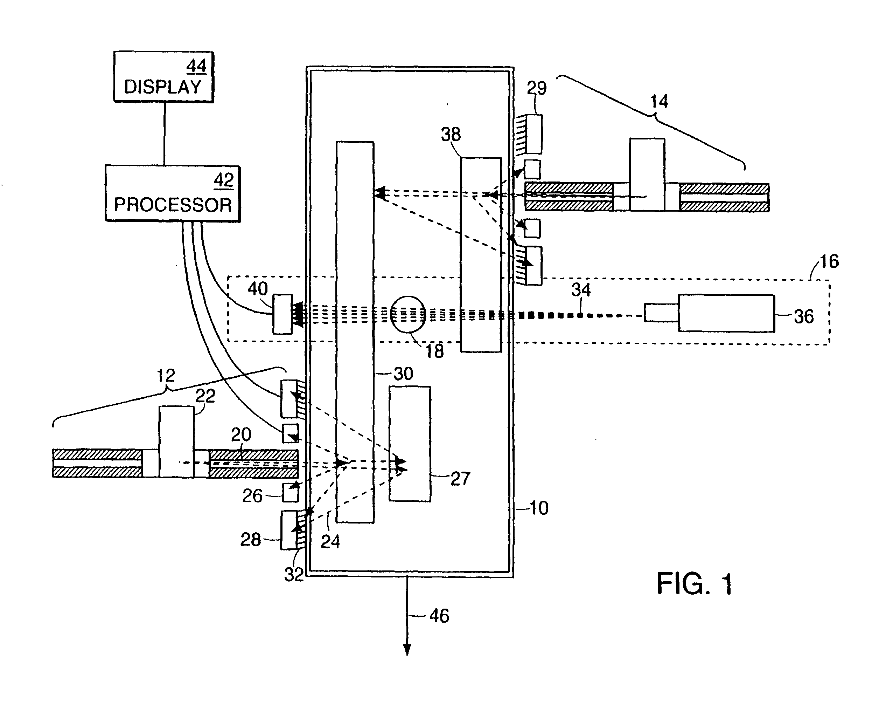

In accordance with embodiments of the present invention, independent x-ray generators are used to provide sources of penetrating radiation for transmission and scatter images. One or more x-ray generators may be used for each modality. Referring to FIG. 1, a top view of a cargo container **10** being examined by two backscatter x-rays systems **12** and **14,** one on either side of container **10,** and two orthogonal transmission systems, one horizontal **16,** the other vertical **18**.

Describing, first, backscatter x-rays systems **12** and **14,** x-ray beam **20** is emitted by an x-ray source **22** of one of various sorts known to persons skilled in the art. Beam **20** may also be comprised of other forms of penetrating radiation and may be monoenergetic or multienergetic, or, additionally, of varying spectral characteristics. Backscatter x-ray beam **20** is typically generated by a DC voltage applied to the anode of an x-ray tube **22** so that beam **20** is typically continuous. However, a beam **20** of other temporal characteristics is within the scope of the invention. Beam **20** has a prescribed cross sectional profile, typically that of a flying spot or pencil beam. Beam **20** will be referred to in the present description, without limitation, as an x-ray beam, and also, without limitation, as a pencil beam. In a preferred embodiment of the invention, a scanned pencil beam, whose position and cross section is well known at every point in time, is used. The cross section of the pencil beam defines the spatial resolution of the images. Typical pencil beam sizes are a few mm in diameter at a distance of a meter from the beam defining collimation; that is, an angular spread in the beam of < 5 milliradians.

Backscatter beam **20** is typically characterized by x-ray energies in the range below 300 keV, so that detected backscatter has a component significantly dependent on the composition of the scattering material. Penetrating radiation scattered by an object **27** within enclosure **10** is detected by one or more x-ray detectors **26** and **28.** X-ray detectors **28** disposed more distantly from x-ray beam **20** than other detectors **26** detect x-rays singly scattered only from more distant objects **27** whereas any scattering incident on outer detector **28** from a near-field object **30** must be due to multiple scattering of the x-ray radiation within the near-feld object and is thereby sharply attenuated. Consequently, inner detectors **26** are preferentially more sensitive to near-field objects 30, while outer detectors **28** are preferentially more sensitive to far-field objects **27.** Since beam **20** is typically a pencil beam, i.e., a beam having a narrow angular extent, typically on the order of 1°, the source of detected scattering may be localized both with respect to depth and with respect to lateral position. In order to obtain greater spatial resolution of the source of scattered radiation, collimators **32** may be employed, as known to persons skilled in the x-ray art, for narrowing the field of view of segments of detector **28.**

Transmission systems **16** and **18** are now described. X-ray beam **34** is produced by source **36** which is typically a high energy source of penetrating radiation such as a linear accelerator (Linac) for example. In a preferred embodiment of the invention, beam **34** is a fan beam, subtending typically 30°. The transmission x-ray source from a linear accelerator is inherently pulsed, with typical pulse rates in the range between 100 and 400 pulses per second. The x-ray intensity used for transmission, namely the total x-ray power emitted at source **36,** is several orders of magnitude greater than that of x-ray beam **20** used for scattering, mainly because the latter is a pencil beam subtending << 1°, while the former is a fan beam subtending about 30°, so that comparable detector signal-to-noise in a background limited environment requires substantially larger transmission beam fluxes. The portion of transmission beam **34** which traverses enclosure **10** and objects **30** and **38** contained within the enclosure is detected by transmission detector **40.**

The electrical output signals produced by detectors **26, 28,** and **40** are processed by processor **42** to derive characteristics such as the geometry, position, density, mass, and effective atomic number of the contents from the scatter signals and transmission signals using algorithms known to persons skilled in the art of x-ray inspection. In particular, images of the contents of enclosure **10** may be produced by an image generator. As used in this description and in the appended claims, the term "image" refers to an ordered representation of detector signals corresponding to spatial positions. For example, the image may be an array of values within an electronic memory, or, alternatively, a visual image may be formed on a display device **44** such as a video screen or printer. The use of algorithms, as known in the art of x-ray inspection, for identifying suspect regions within the enclosure, and identification of the presence of a specified condition by means of an alarm or otherwise, is within the scope of the present invention.

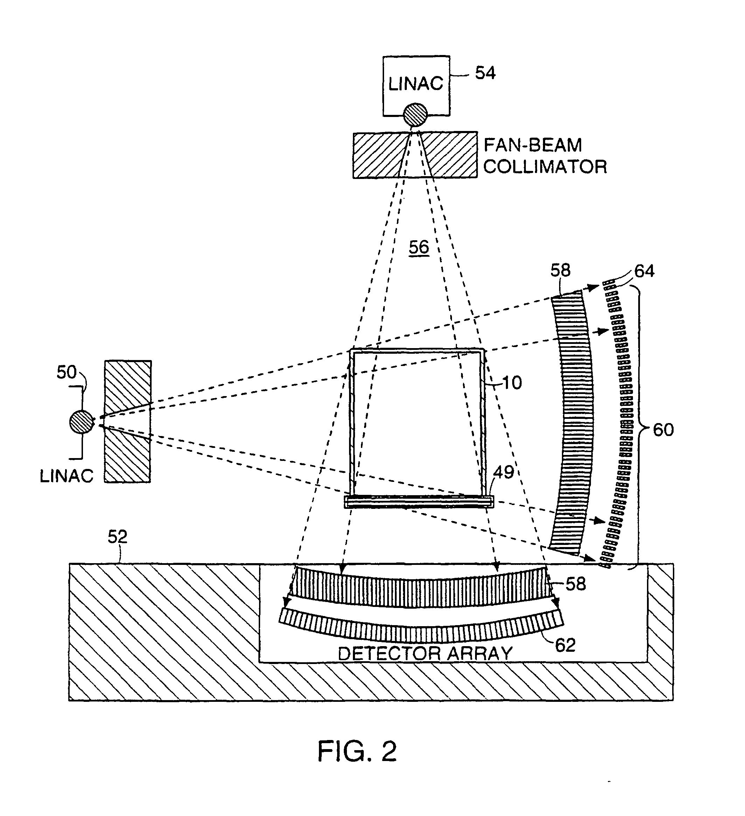

In many applications, it is desirable that enclosure **10** be inspected in a single pass of the enclosure through the x-ray inspection system. Enclosure **10** may move through the system in a direction indicated by arrow **46,** either by means of self-propulsion or by any means of mechanical conveyance, such as conveyor **49** (shown in FIG. 2) of the enclosure with respect to the system. It is to be understood that motion of the system with respect to the enclosure is an equivalent application of the invention.

One problem that must be overcome, if one or more transmission images and one or more scatter images are to be obtained in a single pass of the enclosure through the x-ray inspection system, is that of the elimination of cross talk between the transmission and scatter systems. In particular, radiation from the intense transmission beam **34** may scatter from material within enclosure 10 and be detected by backscatter detectors **26** and **28** that must count relatively low rates and are thus very sensitive even to highly attenuated and multiply scattered radiation originating within transmission beam **34.**

In accordance with the present invention, the backscatter signals and transmission signals are rendered completely independent of one another by temporal gating of the different detectors, as described in greater detail below.

Referring now to FIG. 2, a schematic is shown of a side view in cross section of transmission imaging systems **16** and **18** of the inspection system of FIG. 1. A first linear accelerator **50** is horizontal, i.e., parallel to the ground **52.** A second linear accelerator **54** shines its x-rays **56** into the ground. Collimators **58** are placed in front of each Linac to produce narrow fan beams of x-rays that pass through the container into arrays **60** and **62** of detectors. The cross section of individual detectors **64** in the direction of the x-ray beam determines the spatial resolution of the transmitted image.

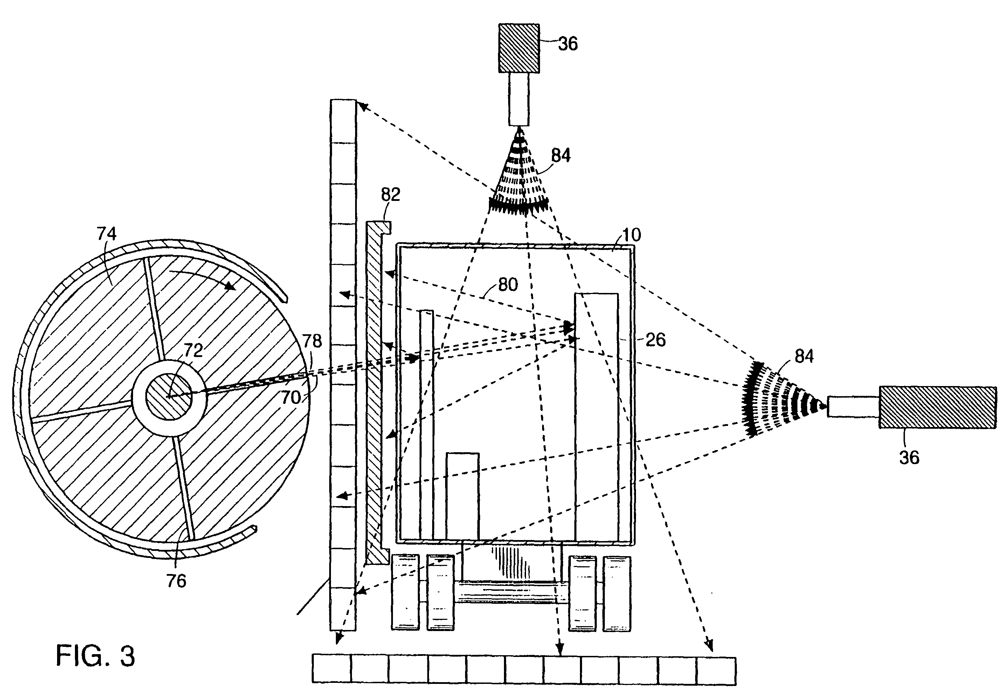

Figure 3 is a schematic of an elevation view of an inspection system in accordance with a preferred embodiment of the invention. Only one backscattered x-ray system is shown, although two or more backscatter systems may be present, as designated by numerals **12** and **14** in FIG. 1. X-ray beam **70,** generated by an x-ray source **72** in the center of a rotating wheel **74,** pass out of the wheel **74** through hollow spokes **76.** Rotating wheel **74** is an x-ray blocking material such as lead. The beam size is determined by exit hole **78** at the end of the spokes **76.** As wheel **74** turns, x-ray beam **70** sweeps across container **10.** Various scanning mechanisms are known to persons skilled in the art to provide for scanning of beam **70** across a region of space which may include the target container **10,** all such scanning mechanisms being within the scope of the present invention. X-rays **80** backscattered from objects **26** within container **10** are detected in long backscatter detectors **82** on either side of x-ray beam **10.** Transmission beams **84** are sketched in for reference.

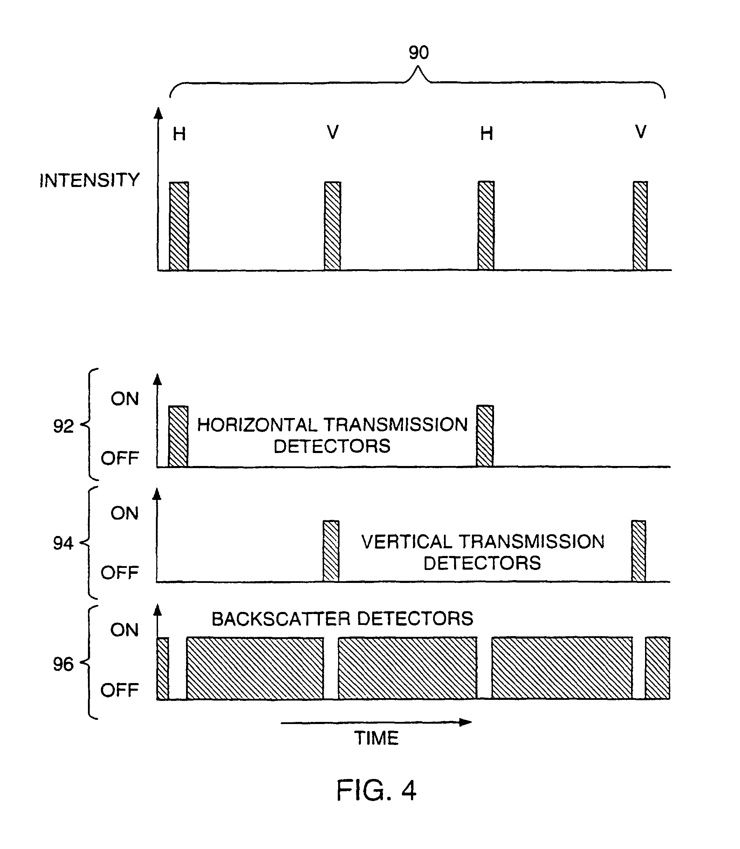

Referring now to FIG. 4, a sequence is shown for gating the Linacs and the transmission and backscatter detectors in accordance with a preferred embodiment of the invention.
The upper part of the figure shows the pulse sequence **90** from two linear accelerators as a function of time plotted on the horizontal axis, with **H** representing pulsing of the horizontal Linac and **V** representing pulsing of the vertical Linac. Typically, the pulse width is 5 µs, repeated every 5 ms; i.e. 200 pulses per second. The vertical and horizontal accelerators are synchronized so that the x-ray beams alternate every 2.5 ms.

The lower part of FIG. 4 shows the "on-time" structure of the detectors which are easily gated on and off with microsecond timing. The time line for the vertical detectors is shown in line **92,** that for the horizontal transmission detectors in line **94** and that for the backscatter detectors in line **96.** The horizontal and vertical x-ray detectors are gated on only during the times when the respective x-rays are on. In this way each of the detectors is insensitive to any radiation or detector noise that is present when their respective x-ray beams are off. The timing introduces no loss of signal for the transmission detectors and only an 0.2% loss of signal for the backscatter detectors which are off for 5 µs every 2.5 ms.

Referring again to FIG. 1, the only cross talk between the detectors is between the two backscatter detectors **28** and **29.** That cross talk is minimized by spatially separating the backscatter systems **12** and **14.** A 15 feet separation, which is quite practical when scanning a 40-foot container, reduces the cross talk to insignificance since pencil beams **70** are relatively weak. The placement of Linacs **36** and **18** is a matter of design choice, and the Linacs may be placed, for example, in an intermediate position between the backscatter detectors, as shown in FIG. 1.

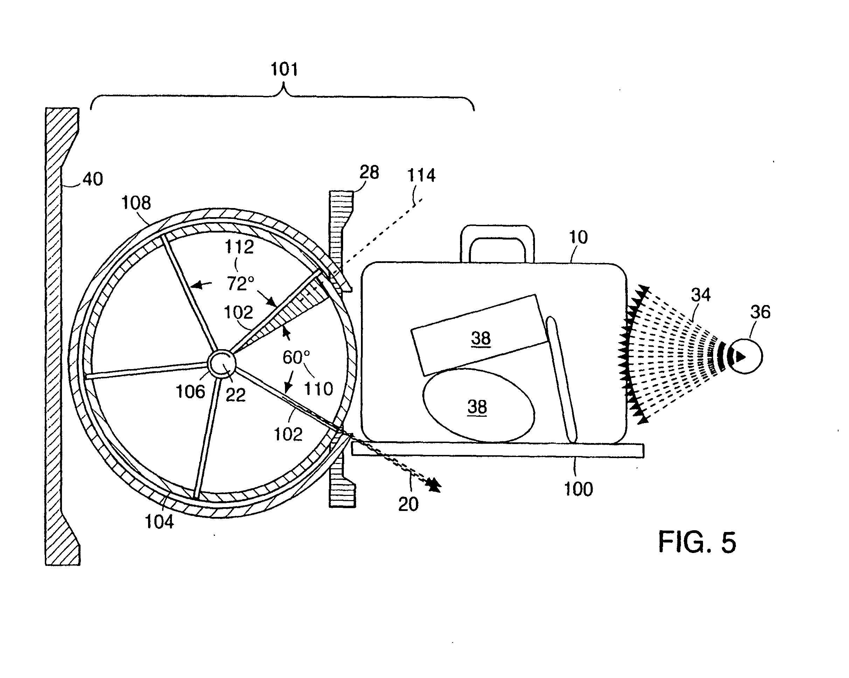

The use of alternately gated transmission and scattering functionalities in accordance with the present invention is not limited to the embodiments heretofore described. Referring now to FIG. 5, a further embodiment of the invention is shown schematically from the side, wherein two independent x-ray generating systems illuminate an inspected object **10** in temporal sequence. Object **10,** shown as a suitcase containing articles **38.** Suitcase **10** may be inspected while being conveyed in a direction out of the drawing by means of conveyor **100.** A transmission inspection system consists of x-ray generator **36** that emits a fan beam **34** of x-rays. Transmitted x-rays from beam **34** traverse object **10** and are detected by transmission detector **40,** which may comprise an array of individual detectors. A separate backscatter system consists of a second x-ray generator **22** and a mechanism, designated generally by numeral **101,** for causing x-ray beam 20 to scan object **10.** Beam **34** used for transmission detection and beam **20** used for scatter detection may be oriented in any way with respect to one another within the scope of the invention. They may, for example, be on opposite sides of object **10** as shown, or may be on the same side, or on adjacent sides.

One possible embodiment of scanning mechanism **101** as depicted in Fig. 5, causes x-ray beam **20** to pass out of hollow spokes **102** of rotating wheel **104,** in the manner of a swept pencil beam. As wheel **104** rotates, x-ray beam **20** sweeps out of the spokes in the manner of water from a sprinkler hose. An inner collimator **106** and an outer collimator **108** restrict the emerging x-rays to an arc **110** of the order of 60°. Hollow spokes **102** in the embodiment shown have a spacing **112** of 72°, so that, as wheel **104** turns, there are periods (represented by sector **114**) during which beam **20** is not incident upon object **10.** During these "dead" spaces, backscatter detectors **28** may be inactivated and fan beam **34** turned on.

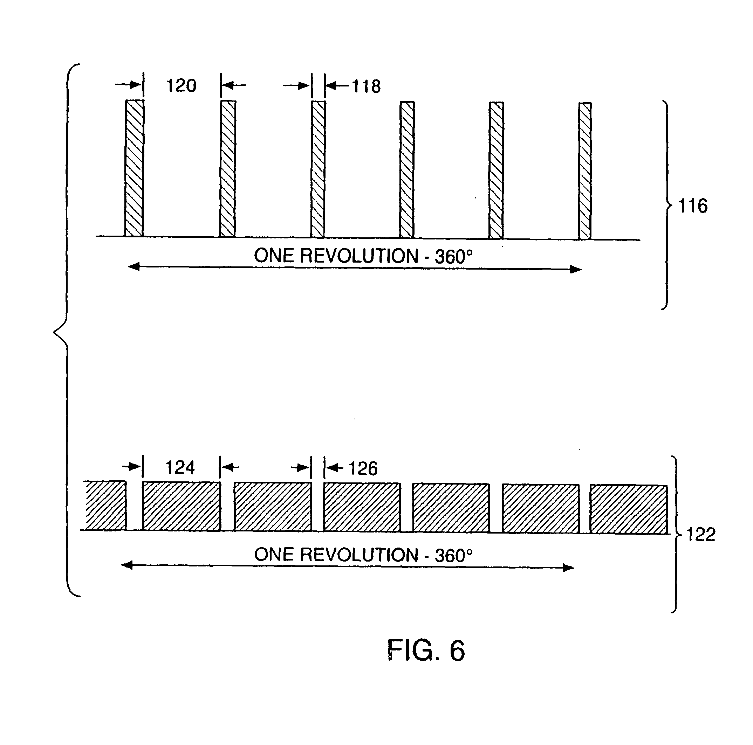

A timing sequence corresponding to application of the embodiment of Fig. 5 is discussed with reference to Fig. 6. Upper panel **116** depicts the timing of the transmission beam, which, in the embodiment described above is a fan beam. The horizontal axis corresponds to time, calibrated in terms of the rotation of wheel **104.** The hatched periods **118** correspond to periods during which transmission beam in on, each period corresponding, in turn, to approximately 11° of rotation of wheel **104.** During intervening periods **120,** corresponding to approximately 61° of rotation of wheel **104,** the transmission beam is inactive. Lower panel **122** depicts the timing of the scatter beam which is substantially complementary to that of the transmission beam. The scatter pencil beam is turned on during periods **124** when the transmission beam is off, and, conversely, the scatter beam is turned off or is otherwise not incident on inspected object **10** during periods **126** when the transmission beam is on. Periods **124** correspond to approximately 60° of rotation of wheel **104,** while the off periods for the scatter beam correspond to approximately 12° of rotation. Since the transmission and scatter sources are independent and complementary in timing, the beams may operate at different energies, currents, filtration and focal spot size.

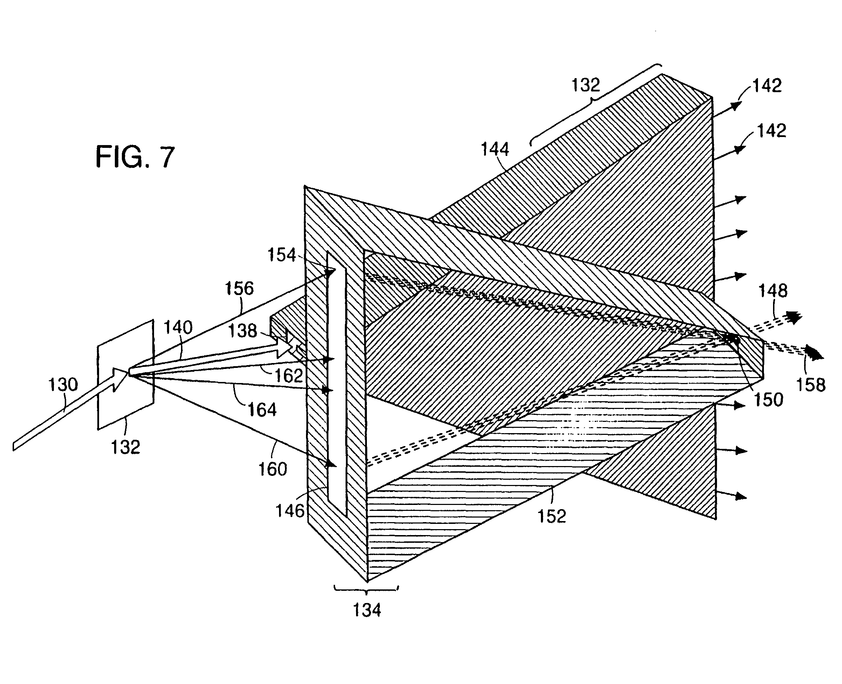

In accordance with other embodiments of the invention, a single source of electrons may be used to form more than one x-ray beam incident upon an inspected object. Electrons are readily controlled electromagnetically, as known in the art of electron beam tubes generally, and the electrons may be focused and directed to specific locations on anodes where x-rays may be generated. Referring now to Fig. 7, a single electron beam **130** is directed by magnetic or electrostatic deflectors **132,** as well known in the art, alternately into a fan beam generator **134** and into a scanning beam generator **136.** Any sequence of alternation is within the scope of the invention. One example of a possible sequence is now described. Electron beam **130** may be directed to an anode **138** along path **140** for a specified duration of time. X-rays **142** generated at anode **138** are formed into a fan beam by a collimator **144.** At the end of the preset dwell time, electron beam **130** is moved over to long anode **146** over which it is swept upward and/or downward, generating an x-ray beam such as beam **148** that emerges from aperture **150** in collimator **152.** Four electron positions **154** are shown on anode **146.** Electron beam **156** striking near the top of anode **146** generates an x-ray beam **158** that is directed substantially downward through the inspected container. Electron beam **160** which strikes near the bottom of anode **146** generates x-ray beam **148** that is directed upward through the inspected container. As electron beam **130** sweeps from position **156** through positions **162, 164,** to **160,** the emergent x-ray beam sweeps through the inspected container. After each cyclical sweep of the x-ray beam, electron beam **130** is directed back to anode **138** to generate a fan beam **142.**

The dwell time at anode **138** and the speed and number of sweeps of electron beam **130** across anode **146** can all be varied to optimize the effectiveness of the inspection under particular circumstances.

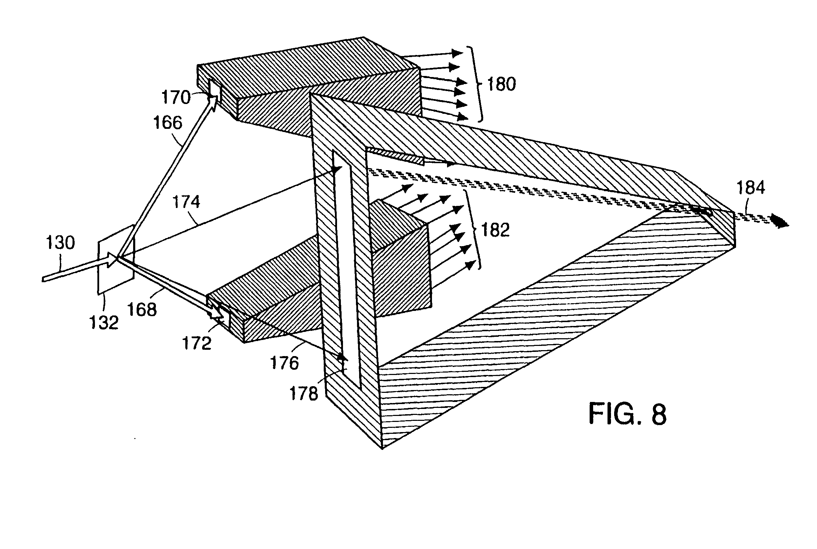

Additionally, in accordance with further embodiments of the invention, a steerable source of x-rays may also be employed to obtain images, in transmission and scattering, for dual (or multiple) energy and/or stereoscopic imaging. A further embodiment is shown in FIG. 8, where electron beam **130** is directed by magnetic or electrostatic deflectors **132** in directions **166** and **168** to anodes **170** and **172** respectively, and in directions **174** and **176** to positions along a long anode **178.** Alternatively, electron beam **130** may be scanned across anode **178** in two dimensions, creating a pencil beam steerable across the face of the inspected article. In the embodiment shown, electron beam **132** creates two fan beams, **180** and **182,** for the production of two stereoscopic images of x-rays transmitted through the inspected container, and, additionally, a scanning pencil beam **184.**

It is to be understood that the energy of the electrons in the beam, or, alternatively, their flux, may be varied in any way, during the course of the inspection, within the scope of the invention. Additionally, the relative scanning and dwell times are matters of system design preference. For example, electron beam **130** may first dwell at position **168,** then raster across anode **178** to produce a scanning x-ray beam for scatter imaging, then swell on position **166** for the other view of the stereoscopic image, then raster scan across anode **178** again before starting the cycle over, as the inspected container is conveyed through the x-ray beams. It is preferred that the speed of the conveyor being scanned be such that there are no gaps in either the transmission or scatter images.

The described embodiments of the invention are intended to be merely exemplary and numerous variations and modifications will be apparent to those skilled in the art. All such variations and modifications are intended to be within the scope of the present invention as defined in the appended claims.

## Claims

1. An inspection system for inspecting an enclosure having contents, the system comprising:
a. a first source for producing an intermittent first beam of penetrating radiation having a duration of inactivity.
b. at least one detector for generating a transmission signal based on at least the penetrating radiation of the first beam transmitted through the enclosure;
c. a second source for producing a second beam of penetrating radiation,
d. at least one detector for generating a scatter signal based on at least the penetrating radiation scattered by the contents of the enclosure during the duration of inactivity of the first source; and
e. a processor for deriving properties of the contents of the enclosure on the basis of the transmission signal and the scatter signal.

2. An inspection system according to claim 1, wherein the first source is a linear accelerator.

3. An inspection system according to claim 1, wherein the intermittent first beam is a fan beam.

4. An inspection system according to claim 1, wherein the second beam is a pencil beam.

5. An inspection system according to claim 1, wherein the first source has a first energy spectrum and the second source has a second energy spectrum different from the first energy spectrum.

6. An inspection system according to claim 4, wherein the energy spectrum of the first beam includes x-rays exceeding 1 MeV and the energy spectrum of the second beam includes only x-rays below 500 keV.

7. An inspection system according to claim 1, wherein the processor includes a calculating device for deriving at least one of the density, mass, atomic number, shape, and position of an object disposed within the enclosure.

8. An inspection system according to claim 1, wherein the processor includes an image generator for producing transmission and scatter images.

9. An inspection system according to claim 8, further including a display device for exhibiting at least one of the transmission and scatter images.

10. An inspection system according to claim 1, wherein the first beam is periodically pulsed.

11. An inspection system according to claim 10, wherein the at least one detector for generating a transmission signal is gated for detection substantially only during the pulsing of the first beam.

12. An inspection system according to claim 10, wherein the at least one detector for generating a scatter signal is gated for non-detection during the pulsing of the first beam.

13. An inspection system according to claim 1, further including a steerable electron beam for generating the first beam and the second beam of penetrating radiation.

14. An inspection system according to claim 1, wherein the first beam of penetrating radiation may impinge upon the enclosure from a plurality of directions.

15. A method for inspecting an enclosure, the method comprising:
a. periodically illuminating the enclosure with a first intermittent beam of penetrating radiation having a duration of inactivity;
b. generating a transmission signal based on at least the penetrating radiation of the first beam transmitted through the enclosure;
c. scanning the enclosure with a second beam of penetrating radiation,
d. generating a scatter signal based on at least the penetrating radiation scattered by the contents of the enclosure during the duration of inactivity of the first intermittent beam; and
e. deriving properties of the contents of the enclosure on the basis of the transmission signal and the scatter signal.

16. A method according to claim 15, wherein the step of deriving properties of the contents of the enclosure includes deriving at least one of the density, mass, atomic number, shape, and position of an object disposed within the enclosure.

17. A method according to claim 15, wherein the step of generating a scatter signal includes gating the generation of a scatter signal in such a manner that no signal is generated during the periodic illumination of the enclosure with the pulsed beam of penetrating radiation.

## Patentansprüche

1. Inspektionssystem zum Inspizieren einer Umhüllung mit Inhalt, wobei das System folgendes umfasst:
a. eine erste Quelle zum Erzeugen eines intermittierenden ersten Strahls durchdringender Strahlung mit einer Untätigkeitsdauer;
b. mindestens einen Detektor zum Generieren eines Übertragungssignals, das mindestens auf der durchdringenden Strahlung des ersten durch die Umhüllung gesendeten Strahls basiert;
c. eine zweite Quelle zum Erzeugen eines zweiten Strahls durchdringender Strahlung;
d. mindestens einen Detektor zum Erzeugen eines Streusignals, das mindestens auf der während der Untätigkeitsdauer der ersten Quelle vom Inhalt der Umhüllung gestreuten durchdringenden Strahlung basiert; und
e. einen Prozessor zum Ableiten von Eigenschaften des Inhalts der Umhüllung auf der Basis des Übertragungssignals und des Streusignals.

2. Inspektionssystem nach Anspruch 1, wobei es sich bei der ersten Quelle um einen Linearbeschleuniger handelt.

3. Inspektionssystem nach Anspruch 1, wobei es sich beim intermittierenden ersten Strahl um einen Fächerstrahl handelt.

4. Inspektionssystem nach Anspruch 1, wobei es sich beim zweiten Strahl um ein Schmalbündel handelt.

5. Inspektionssystem nach Anspruch 1, wobei die erste Quelle ein erstes Energiespektrum hat und die zweite Quelle ein zweites, vom ersten Energiespektrum verschiedenes Energiespektrum hat.

6. Inspektionssystem nach Anspruch 4, wobei das Energiespektrum des ersten Strahls 1 MeV übertreffende Röntgenstrahlen umfasst und das Energiespektrum des zweiten Strahls nur Röntgentstrahlen unter 500 keV umfasst.

7. Inspektionssystem nach Anspruch 1, wobei der Prozessor eine Rechenvorrichtung umfasst, um die Dichte und/oder die Masse und/oder die Atomzahl und/oder die Form und/oder die Lage eines in der Umhüllung befindlichen Objekts abzuleiten.

8. Inspektionssystem nach Anspruch 1, wobei der Prozessor einen Bildgenerator zum Erzeugen von Übertragungs- und Streubildern umfasst.

9. Inspektionssystem nach Anspruch 8, das weiter eine Anzeigevorrichtung zum Darstellen der Übertragungsbilder und/oder der Streubilder umfasst.

10. Inspektionssystem nach Anspruch 1, wobei der erste Strahl periodisch gepulst ist.

11. Inspektionssystem nach Anspruch 10, wobei der mindestens eine Detektor zum Generieren eines Übertragungssignals im Wesentlichen nur während des Pulsierens des ersten Strahls zum Erkennen durchgeschaltet ist.

12. Inspektionssystem nach Anspruch 10, wobei der mindestens eine Detektor zum Generieren eines Streusignals während des Pulsierens des ersten Strahls zum Nicht-Erkennen durchgeschaltet ist.

13. Inspektionssystem nach Anspruch 1, das weiter einen lenkbaren Elektronenstrahl zum Generieren des ersten Strahls und des zweiten Strahls durchdringender Strahlung umfasst.

14. Inspektionssystem nach Anspruch 1, wobei der erste Strahl durchdringender Strahlung aus einer Vielheit von Richtungen auf die Umhüllung einfallen kann.

15. Verfahren zum Inspizieren einer Umhüllung, wobei das Verfahren folgendes umfasst:
a. periodisches Beleuchten der Umhüllung mit einem ersten intermittierenden Strahl durchdringender Strahlung mit einer Untätigkeitsdauer;
b. Generieren eines Übertragungssignals, das mindestens auf der durchdringenden Strahlung des ersten durch die Umhüllung gesendeten Strahls basiert;
c. Abtasten der Umhüllung mit einem zweiten Strahl durchdringender Strahlung;
d. Generieren eines Streusignals, das mindestens auf der während der Untätigkeitsdauer des ersten intermittierenden Strahls vom Inhalt der Umhüllung gestreuten Strahlung basiert; und
e. Ableiten von Eigenschaften des Inhalts der Umhüllung auf der Basis des Übertragungssignals und des Streusignals.

16. Verfahren nach Anspruch 15, wobei der Schritt des Ableitens von Eigenschaften des Inhalts der Umhüllung das Ableiten der Dichte und/oder der Masse und/oder der Atomzahl und/oder der Form und/oder der Lage eines in der Umhüllung befindlichen Objekts umfasst.

17. Verfahren nach Anspruch 15, wobei der Schritt des Generierens eines Streusignals das Durchschalten eines Streusignals auf eine Weise umfasst, dass während der periodischen Beleuchtung der Umhüllung mit dem gepulsten Strahl durchdringender Strahlung kein Signal generiert wird.

## Revendications

1. Système d'inspection permettant d'examiner un volume fermé et son contenu comprenant :
a. une première source pour produire un premier faisceau intermittent de rayonnement pénétrant ayant une durée d'inactivité ;
b. au moins un détecteur pour produire un signal d'émission basé sur au moins le rayonnement pénétrant du premier faisceau transmis à travers le volume fermé ;
c. une seconde source pour produire un second faisceau de rayonnement pénétrant ;
d. au moins un détecteur pour produire un signal de dispersion basé sur au moins le rayonnement pénétrant dispersé par le contenu du volume fermé durant la durée d'inactivité de la première source et,
e. un processeur pour rendre compte du contenu du volume fermé sur la base du signal d'émission et du signal de dispersion.

2. Système d'inspection selon la revendication 1, dans lequel la première source est un accélérateur linéaire.

3. Système d'inspection selon la revendication 1, dans lequel le premier faisceau intermittent est un faisceau en éventail.

4. Système d'inspection selon la revendication 1, dans lequel le second faisceau est un faisceau étroit.

5. Système d'inspection selon la revendication 1, dans lequel la première source a un premier spectre d'énergie et la seconde source a un second spectre d'énergie différent du premier spectre d'énergie.

6. Système d'inspection selon la revendication 4, dans lequel le spectre d'énergie du premier faisceau comprend des rayons X dépassant 1 MeV et le spectre d'énergie du second faisceau comprend seulement des rayons X en dessous de 500 keV.

7. Système d'inspection selon la revendication 1, dans lequel le processeur comprend un calculateur pour rendre compte d'au moins une densité, masse, numéro atomique, forme et position d'un objet disposé à l'intérieur du volume fermé.

8. Système d'inspection selon la revendication 1, dans lequel le processeur comprend un générateur d'images pour produire des images d'émission et de dispersion.

9. Système d'inspection selon la revendication 8, dans lequel un appareil d'affichage pour visualiser au moins une image d'émission et de dispersion.

10. Système d'inspection selon la revendication 1, dans lequel le premier faisceau est pulsé périodiquement.

11. Système d'inspection selon la revendication 10, dans lequel le détecteur est synchronisé sur le pulsage du premier faisceau pour de manière à détecter le signal d'émission substantiellement seulement pendant la durée d'activité du premier faisceau.

12. Système d'inspection selon la revendication 10, dans lequel le détecteur est synchronisé sur le pulsage du premier faisceau de manière à ne pas détecter le signal de dispersion durant l'activité du premier faisceau.

13. Système d'inspection selon la revendication 1, dans lequel un faisceau d'électrons est commandé pour produire alternativement le premier faisceau et le second faisceau de rayonnement pénétrant.

14. Système d'inspection selon la revendication 1, dans lequel le premier faisceau de rayonnement pénétrant peut être incident au volume fermé depuis une pluralité de directions.

15. Méthode pour inspecter un volume fermé comprenant :
a. un éclairement périodique du volume fermé avec un premier faisceau intermittent de rayonnement pénétrant ayant une durée d'inactivité ;
b. une production d'un signal d'émission basé sur au moins le rayonnement pénétrant du premier faisceau transmis dans le volume fermé ;
c. l'analyse du volume fermé avec un second faisceau de rayonnement pénétrant ;
d. la production d'un signal de dispersion basé sur au moins le faisceau de rayonnement pénétrant dispersé par le contenu du volume fermé détecté durant la durée d'inactivité du premier faisceau intermittent et,
e. le compte rendu des propriétés du contenu du volume fermé sur la base des signaux d'émission et de dispersion.

16. Méthode selon la revendication 15, dans laquelle l'étape de compte rendu des propriétés du contenu du volume fermé comprend au moins une recherche de densité, masse, numéro atomique, forme et position d'un objet disposé à l'intérieur du volume fermé.

17. Méthode selon la revendication 15, dans laquelle la production du signal de dispersion comprend la synchronisation du signal dispersé de manière qu'aucun signal n'est produit durant la période d'illumination du volume fermé avec le faisceau pulsé de rayonnement pénétrant.
